# EUROPEAN PATENT SPECIFICATION

(11) **EP 3 452 747 B1**
(45) Date of publication and mention of the grant of the patent: **14.10.2020**
(21) Application number: 16729404.0
(22) Date of filing: 02.05.2016
(51) Int. Cl.: F16L 37/088, B60K 15/04, B60K 15/03

(54) **FUEL FILLING LINE - FUEL TANK QUICK CONNECTION APPARATUS**
SCHNELLANSCHLUSSVORRICHTUNG EINER KRAFTSTOFFEINFÜLLLEITUNG EINES KRAFTSTOFFTANKS
APPAREIL DE RACCORDEMENT RAPIDE DE RÉSERVOIR DE CARBURANT - LIGNE DE REMPLISSAGE DE CARBURANT

(43) Date of publication of application: 13.03.2019
(73) Proprietor: NOBEL GEMLIK OTOMOTIV SAN. VE TIC. A.S., 16600 Gemlik, Bursa (TR)
(72) Inventor: CHINTALAPATI, Ramakrishnam Raju, Hyderabad 500 090 (IN)
(74) Representative: Yamankaradeniz, Kemal
(86) International application number: PCT/TR2016/050132
(87) International publication number: WO 2017/192104

(56) References cited:
- EP-A1- 2 597 348
- EP-A1- 2 759 437
- DE-A1- 19 533 920
- US-A1- 2007 026 703

## Description

### THE RELATED ART

The invention relates to a tank connection apparatus mounted between a fuel filling line and a fuel tank of a vehicle in order to ensure quick, easy, and safe coupling of these two components.

The invention particularly relates to a tank connection apparatus with a double lock mechanism connected to the connection pipe end of a fuel filling line and locked with a "click" sound by means of a spring lock mechanism when it is pushed towards the fuel tank, and at the same time, providing a secondary lock with an interlocking system mounted on the mounting body.

### THE PRIOR ART

As is known, the energy required for motion of vehicles is commonly obtained from fossil fuels in liquid or gas form. Almost all vehicles contain a fuel tank in which fossil fuels (gasoline, diesel fuel etc.) are stored. Said fuel tank is positioned in a protected medium within the vehicle body. Therefore, a fuel filling line is needed for conveying fuel into a fuel tank. A fuel filling line starts from the fuel tank cap of a vehicle and extends down to its fuel tank.

In the prior art, standard rubber hoses and clamps are used for connection of fuel filling lines and fuel tanks. In order to meet the low emission levels required in automotive sector, rubber hoses/pipes are designed in multilayer form, which increases the cost. Even so, rubber pipes/hoses cannot meet the required PZEV (Partial Zero Emissions Vehicle) emission values in some cases. Application of the standard clamp system used in mounting of fuel filling lines and fuel tanks takes long time and difficulties are encountered in the control of the process (the locking force might vary and standard clamps cannot provide adequate locking force during mounting). As a result of these reasons, novel mechanisms are required in the automotive sector for providing quicker and better locking.

Typical fuel tank engagement ends are produced by using a few kinds of materials via over mould injection method, and this causes an increase in the costs. In typical rubber hoses and their mounting via clamps, cantilever loads and extension of the hose are limited. On the contrary, in the sector, the clamps are expected to show strength and resistance against more cantilever loads in case of accidents. Therefore, a locking mechanism is needed that is cheaper, easier to mount, durable against higher cantilever loads, and can resist against extension in case of accidents.

As a result, novel embodiments are needed, which would eliminate the above said drawbacks related to connection of fuel filling lines and fuel tanks, and bring solution to the problems of the prior art systems.

EP 2 759 437 A1 and DE 195 33 920 A1 disclose tank connection arrangements of the prior art.

### PURPOSE OF THE INVENTION

The invention relates to a fuel tank connection apparatus, which meets the above said requirements, eliminates all of the drawbacks, and brings some additional advantages.

A purpose of the invention is to provide a tank connection apparatus allowing easy and safe connection of fuel tanks and fuel filling lines found in vehicles.

Another purpose of the invention is to provide quick and easy locking and opening of the mechanism by means of a locking spring made of stainless steel found in the tank mounting apparatus body.

In the tank connection apparatus according to the invention, during connection to the fuel tank, in addition to the spring locking, a secondary locking is aimed to be provided by an engaging tab structure, and thus it is aimed to improve the safety of the fuel tank connection.

In the tank connection apparatus according to the invention, the tank connector structure is simplified, turned into a weldable form, and this piece is made of HDPE (high density polyethylene) material with glass filled via plastic injection at once. Another purpose of the invention is to combine/couple the tank connection apparatus with the multilayered plastic pipe by means of spin welding method.

With the multilayered grooved pipe used in the tank connection apparatus according to the invention, it is aimed to meet the LEV-III (low emission vehicle) standards and achieve the appropriate non-diffusion (evaporation from pores) values/parameters with low cost.

Another purpose of the invention is to provide the user with an audible feedback by means of a "click" sound that occurs during spring locking while mounting is completed with tank connection apparatus.

By means of the extendable-retractable grooved connection pipe found in the tank connection apparatus according to the invention, it is aimed to allow the grooved connection pipe to extend in the required degree in order not to cause any damage, crack, or break in case of an accident.

Another purpose of the invention is to improve strength against the cantilever load by means of the mounting body and the stainless steel locking spring found in the connection apparatus.

In order to achieve the above said purposes which would be understood better with the below given detailed description, the present invention relates to a tank connection apparatus according to claim 1.

The structural and characteristic features of the invention and all of its advantages shall be understood better with the figures and the detailed description given below in reference to the figures, and therefore, the assessment should be made by taking into account the said figures and detailed explanations.

### BRIEF DESCRIPTION OF THE FIGURES

For better understanding of the embodiment of the present invention and its advantages with its additional components, it should be evaluated together with below described figures.
- **Figure 1**: ; is a three-dimensional view of the tank connection apparatus according to the invention.
- **Figure 2**: ; is a three-dimensional demounted view of the tank connection apparatus according to the invention.
- **Figure 3**: ; is a three-dimensional view of a representative application of the tank connection apparatus according to the invention between the fuel tank cap and the fuel tank of a vehicle.
- **Figure 4**: ; is a demounted view of the mounting body, tank connector, and secondary safety lock of the tank connection apparatus according to the invention.
- **Figure 5**: ; is a mounted view of the mounting body, tank connector, and secondary safety lock of the tank connection apparatus according to the invention.
- **Figure 6**: ; is a three-dimensional view of the tank connector found in the tank connection apparatus according to the invention.
- **Figure 7**: ; is the side profile and side profile section view of the tank connection apparatus according to the invention, respectively.
- **Figure 8**: ; is a view showing the mounting of the locking spring to the tank connector in the tank connection apparatus according to the invention.
- **Figure 9**: ; is a representative view showing the mounting stages of the tank connection apparatus of the invention to the vehicle fuel tank.
- **Figure 10**: ; is a three-dimensional view demounted view of the mounting body, grooved connection pipe, and tank connection pipe in the tank connection apparatus according to the invention.
- **Figure 11**: ; is a three-dimensional view of the connection area section in the secondary safety lock of the tank connection apparatus according to the invention.
- **Figure 12**: ; is a side profile section view of the connection between the tank connection apparatus of the invention and the fuel tank.

### REFERENCE NUMBERS

- **1.**: Tank Connection Apparatus
- **2.**: Tank Connector Female Housing
- **2.1.**: Spring Locking Slot
- **2.2.**: Inclined Edge
- **2.3.**: Tank Welding Protrusion
- **3.**: O-ring Retainer
- **4.**: O-ring 1
- **5.**: Spacer
- **6.**: O-ring 2
- **7.**: Coupling Body
- **7.1.**: Safety Lock Slot
- **7.2.**: Safety Lock Retainer
- **7.3.**: Snapping Tab
- **8.**: Locking Spring
- **8.1.**: Spring Leg
- **8.2.**: Locking Protrusion
- **9.**: Safety Lock
- **9.1.**: Safety Lock Snap
- **9.2.**: Spring Retainer Slot
- **9.3.**: Handle
- **10.**: Corrugated Connection Pipe
- **10.1.**: Corrugations
- **11.**: Filler Pipe
- **12.**: Fuel Tank

### DETAILED DESCRIPTION OF THE INVENTION

In this detailed description, the preferred embodiments of the tank connection apparatus (1) according to the invention are only disclosed for better understanding of the subject, without forming any limiting effect.

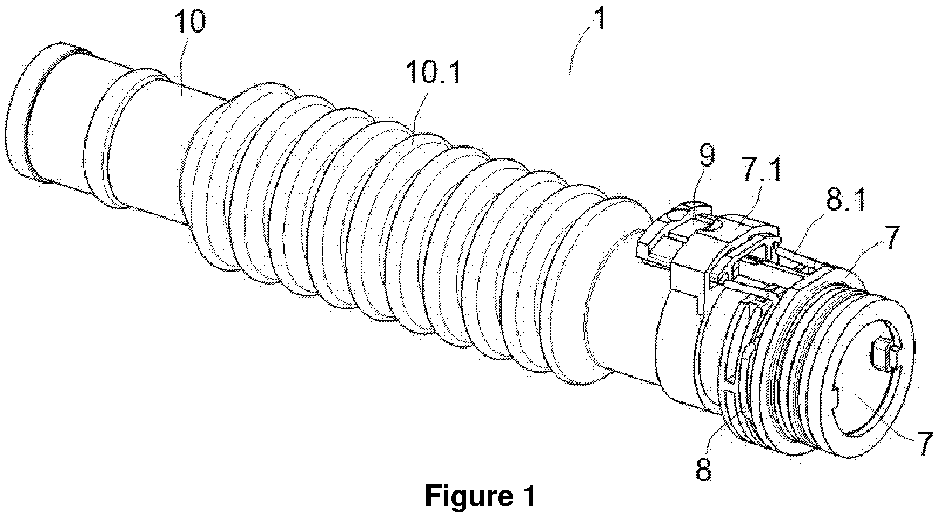

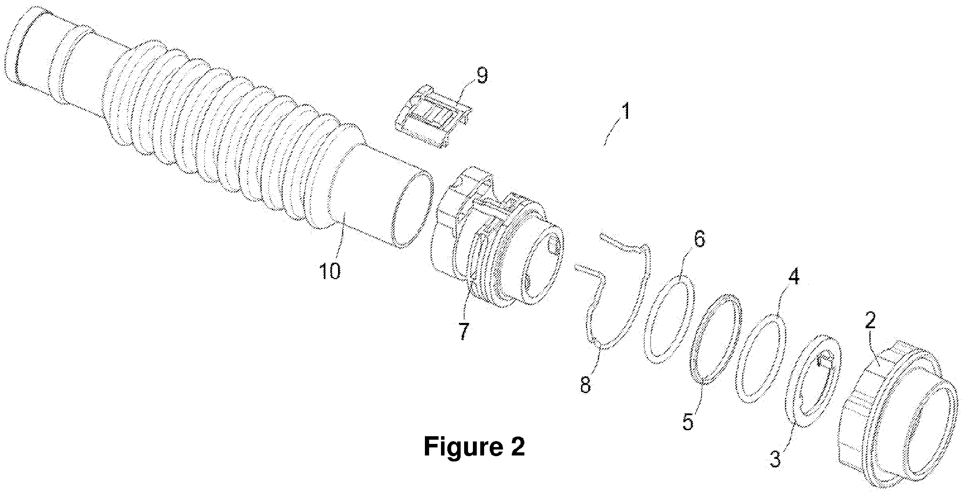

The present invention relates to a tank connection apparatus (1) mounted between a tank filler pipe (11) and a fuel tank (12) of a vehicle in order to ensure quick, easy, and safe coupling of these two components. Figure 1 shows a three-dimensional mounted view and Figure 2 shows a three-dimensional demounted view of the tank connection apparatus (1) according to the invention. Accordingly, a coupling body (7) is found at the centre of the tank connection apparatus (1). The coupling body (7) is the main component on which the other components of the mechanism are mounted. The coupling body (7) is a cylindrically-shaped structure having two open ends and a hole at the middle of the body. A tank connector female housing (2) is attached to the front end and a corrugated connection pipe (10) is mounted to the rear end of the coupling body (7) during mounting. The outer surface of the coupling body (7) comprises a safety lock slot (7.1) and a safety lock retainer (7.2) designed for fixing of the safety lock (9) within said safety lock slot (7.1). A snapping tab (7.3) is found on the inner surface of the coupling body (7) for fixing of the O-ring retainer (3).

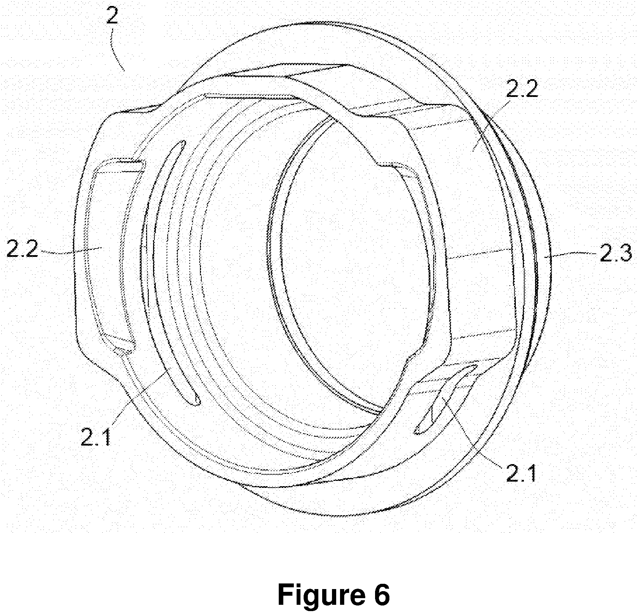

The tank connector female housing (2) found on the tank connection apparatus (1) according to the invention is connected to the vehicle fuel tank (12) inlet and the coupling body (7) from its front and rear ends, respectively. Figure 6 shows a three-dimensional view of said tank connector female housing (2). The rear end of the tank connector female housing (2) connected to the coupling body (7) has an inclined edge (2.2). On said inclined edge (2.2), spring locking slots (2.1), in which the locking spring (8) is attached, are found. The inclined edge (2.2) gradually narrows down from the rear end to the middle part of the tank connector female housing (2). By means of the inclined edge (2.2), while the locking spring (8) is attached to the tank connector female housing (2), it gradually gets squeezed and ultimately fits into the spring locking slots (2.1) with a "click" sound. The front side end of the tank connector female housing (2) comprises a tank welding protrusion (2.3). Said tank welding protrusion (2.3) enables mounting of the tank connector female housing (2) to the fuel tank (12) of the vehicle via spin welding.

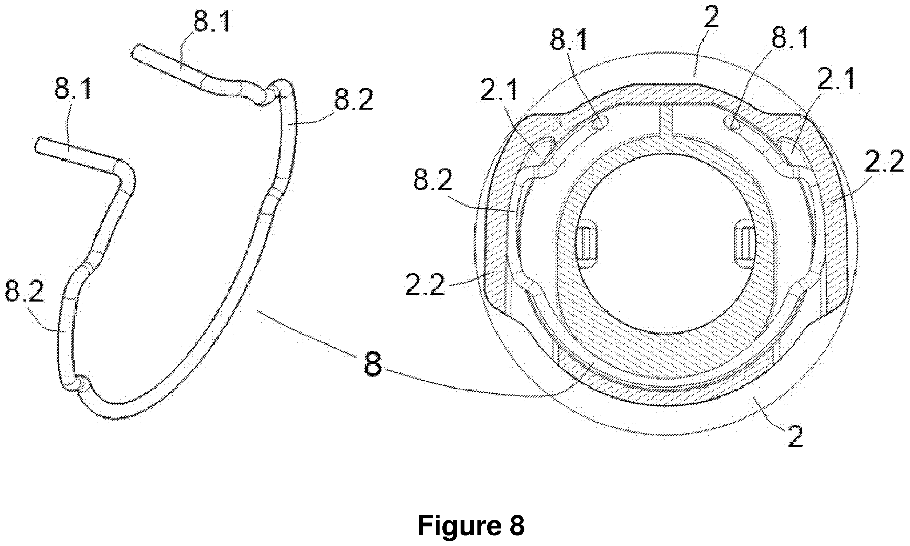

The tank connection apparatus (1) according to the invention comprises a locking spring (8) for attachment and locking of the coupling body (7) to the tank connector female housing (2). The locking spring (8) shown in Figure 8 is actually a ring having an opening on its top section to provide springiness. The locking spring (8) body comprises locking protrusions (8.2) fitting into the spring locking slots (2.1) found on the tank connector female housing (2). The ends of the locking spring (8) where the opening is found are bent inward so as to form spring legs (8.1). Said spring legs (8.1) are embedded into the safety lock slot (7.1) found on the coupling body (7).

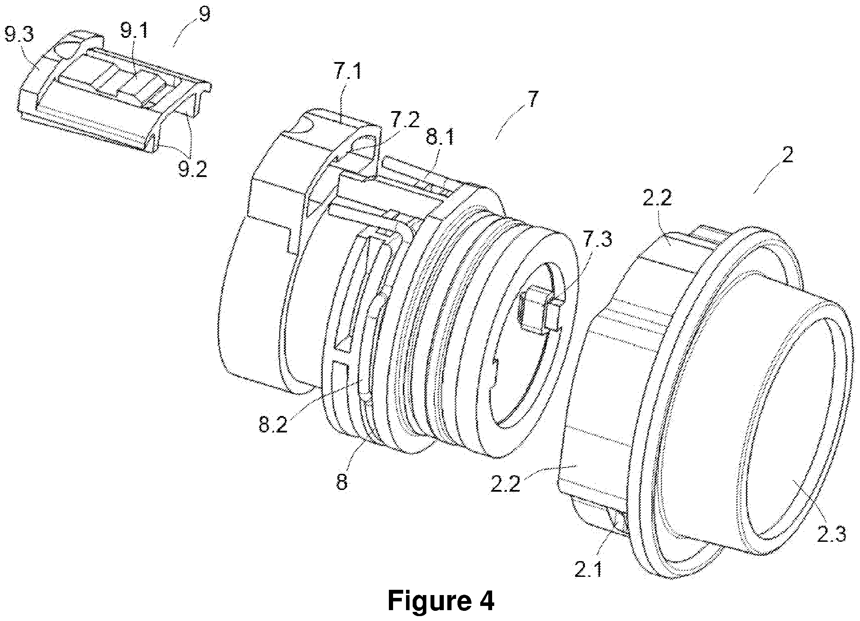

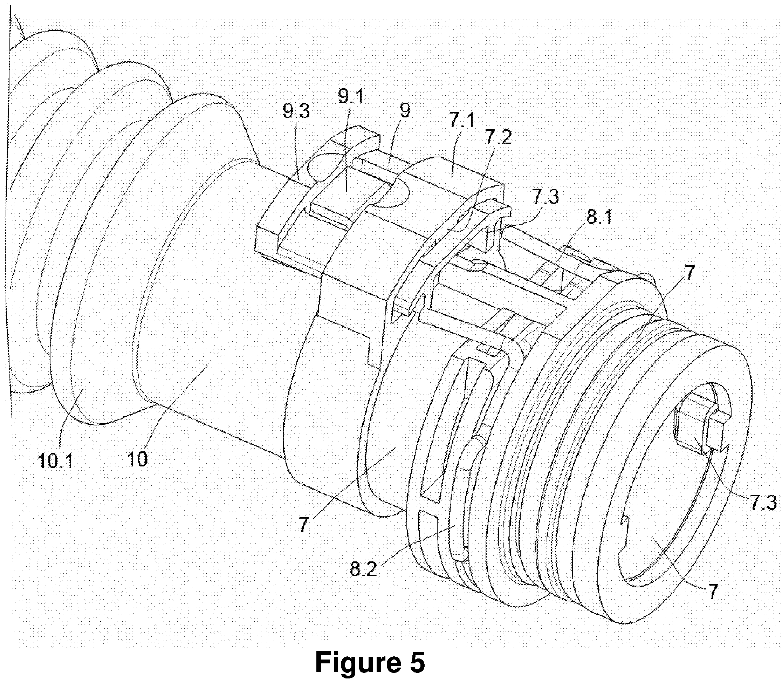

In the tank connection apparatus (1) according to the invention, a secondary safety lock (9) is also found in addition to the locking spring (8) embodiment used for locking of the coupling body (7) and the tank connector female housing (2) to each other. During application, said safety lock (9) is attached to the safety lock slot (7.1) found at the upper portion of the coupling body (7). A safety lock snap (9.1) protrusion is found at the upper part of the safety lock (9). During application, the safety lock snap (9.1) is attached to a safety lock retainer (7.2) found at the inner part of the safety lock slot (7.1) found on the coupling body (7). Two spring retainer slots (9.2) are found at the lower part of the secondary safety lock (9). Said spring retainer slots (9.2) are essentially designed for fixing the spring legs (8.1) of the locking spring (8). A handle (9.3) protrusion is found at the upper part of the safety lock (9). By means of said handle (9.3) part, the secondary safety lock (9) can be pushed into the safety lock slot (7.1) or removed from the safety lock slot (7.1) by pulling. In Figure 4, a three-dimensional demounted view of the safety lock (9), coupling body (7), and tank connector female housing (2) is given. Figure 5 shows these components in mounted state.

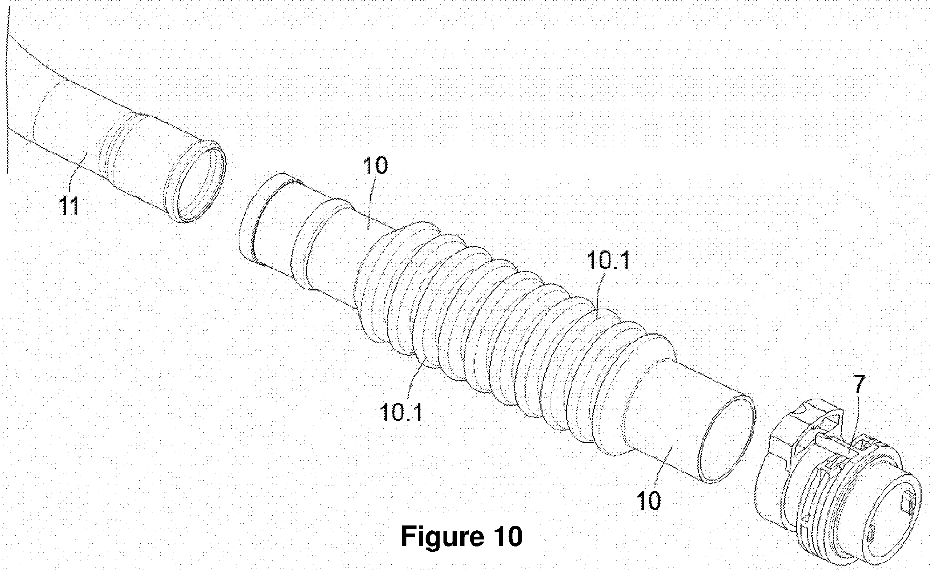

The tank connection apparatus (1) according to the invention comprises a corrugated connection pipe (10) for the connection between the coupling body (7) and the tank filler pipe (11). On said corrugated connection pipe (10) body, corrugations (10.1) are arranged side by side. Said corrugations (10.1) allow the corrugated connection pipe (10) to extend up to a certain length by means of expanding under load. Figure 10 shows a three-dimensional demounted view of the coupling body (7), the corrugated connection pipe (10), and the tank filler pipe (11). Accordingly, the corrugated connection pipe (10) is connected to the coupling body (7) at one end, and to the tank filler pipe (11) at the other end. The corrugated connection pipe (10) is coupled with the coupling body (7) via spin welding or pushing method.

In the tank connection apparatus (1) according to the invention, sealing components consisting of O-ring 1 (4) and O-ring 2 (6) are used in order to ensure sealing between the coupling body (7) and the tank connector female housing (2). Said O-ring 1 (4) and O-ring 2 (6) are separated from each other by means of a spacer (5). An O-ring retainer (3) is used for fixing O-ring 1 (4), O-ring 2 (6), and the spacer (5) at the end of the coupling body (7). Said O-ring (2) is attached to the snapping tabs (7.3) found at the inner part of the coupling body (7), by means of the tabs found thereon.

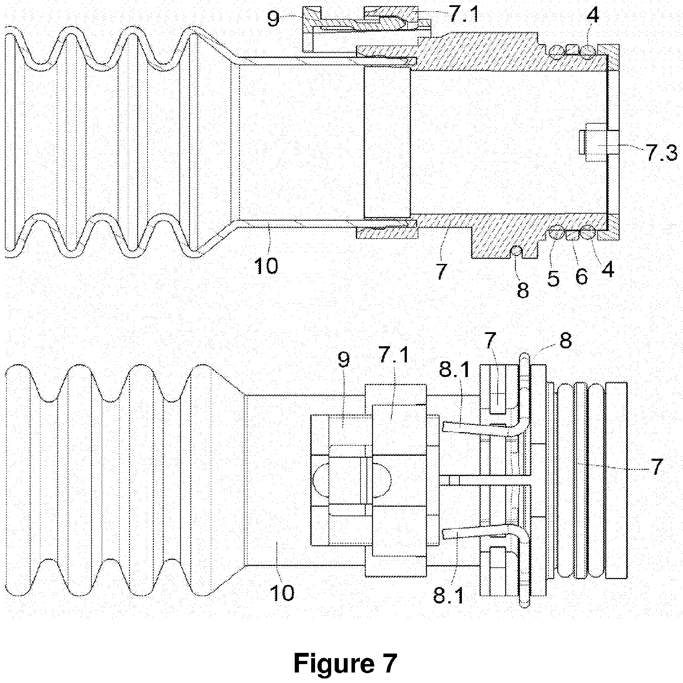

**The mounting stages of the tank connection apparatus (1) according to the invention are as follows:**
The locked mounting and removal operation with the tank connection apparatus (1) according to the invention is essentially performed between the free end of the tank connector female housing (2) comprising the inclined edge (2.2) and the coupling body (7). The tank connector female housing (2) is fixed beforehand at the vehicle fuel tank (12) by means of the tank welding protrusion (2.3). The locking spring (8) is placed into a housing found on the coupling body (7) outer surface and fixed thereon. Following this operation, the spring legs (8.1) of the locking spring (8) are positioned within the safety lock slot (7.1) found at the upper part of the coupling body (7). Following this step, when the secondary safety lock (9) is attached into the safety lock slot (7.1), the spring retainer slots (9.2) of the safety lock (9) limit the spring legs (8.1) from both sides with regard to the axis of rotation, and thus prevent the locking spring (8) from rotating. The placement and the way of locking of the locking spring (8) and the safety lock (9) on the coupling body (7) given as a perspective view in Figure 5 would be understood better from the side profile and section views provided in Figure 7.

As disclosed above, after the locking spring (8) is attached onto the coupling body (7) and then fixed with the safety lock (9), the corrugated connection pipe (10) is mounted at the rear end of the coupling body (7). The sealing component O-ring 1 (4), O-ring 2 (6), and spacer (5) are positioned at the front end of the coupling body (7) and then these components are fixed at the coupling body (7) by means of the O-ring retainer (3) piece. Afterwards, the corrugated connection pipe (10) and the tank filler pipe (11) are connected to each other. Following this step, the tank connection apparatus (1) becomes ready for connection to the fuel tank (12).

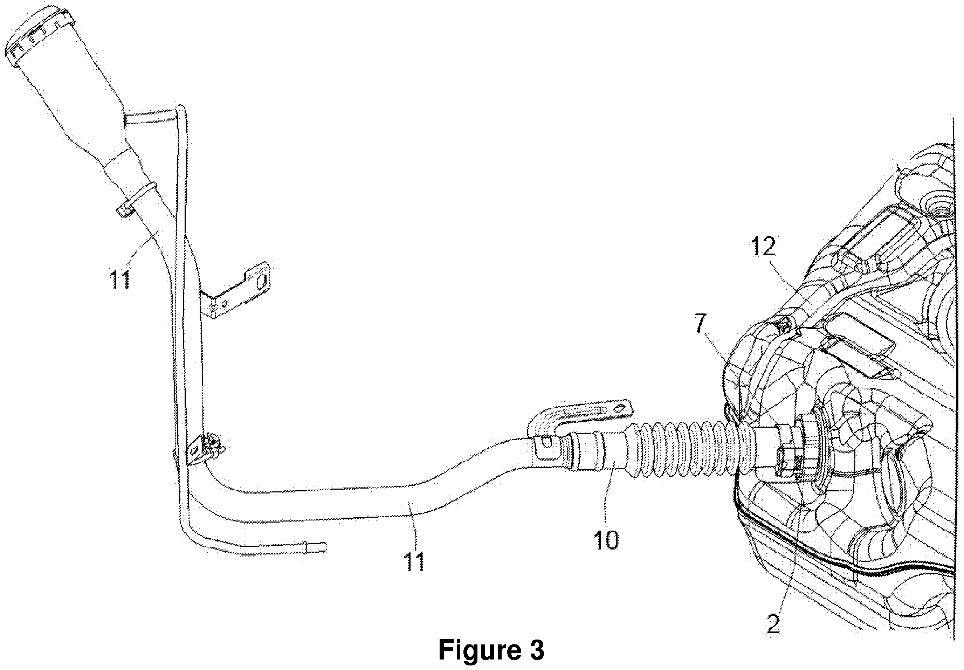

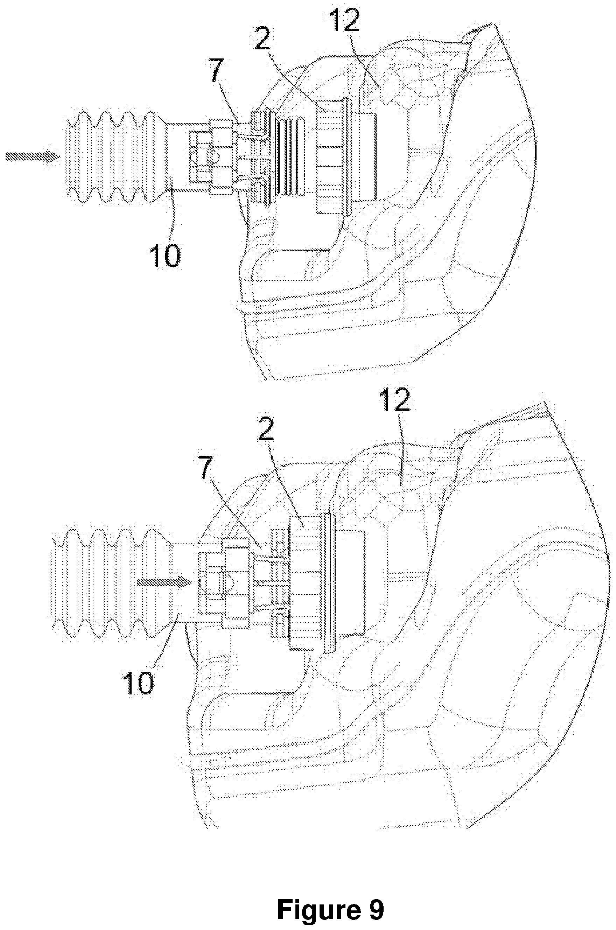

For connection, the free front end of the tank connection apparatus (1) coupling body (7) is inserted into the tank connector female housing (2) and pushed forward. As a result of this motion, the end of the coupling body (7) starts to advance within the inclined edge (2.2) of the tank connector female housing (2). Meanwhile, the locking protrusion (8.2) of the embedded locking spring (8) contacts the inclined edge (2.2), and the more the advancement continues, the more the locking spring (8) gets squeezed. When the coupling body (7) is pushed up to the end of the tank connector female housing (2), the locking protrusions (8.2) reach the spring retainer slots (9.2) found on the inclined edge (2.2). In this case, the locking protrusions (8.2) of the stressed locking spring (8) are released and thus fit into the spring retainer slots (9.2). During this motion, due to the release of the stressed locking spring (8), a "click" sound is heard. This sound acts as a warning for the user to indicate that the mounting is complete. In the side profile views given in Figure 9, the mounting of the tank connection apparatus (1) with the fuel tank (12) is shown before and after the mounting operation. The tank connection apparatus (1) is locked to the fuel tank (12) by being pushed in the direction of the arrow given in Figure 9. Figure 3 shows a perspective view of a preferred embodiment of the connection performed between the tank filler pipe (11) and the fuel tank (12) by means of the tank connection apparatus (1).

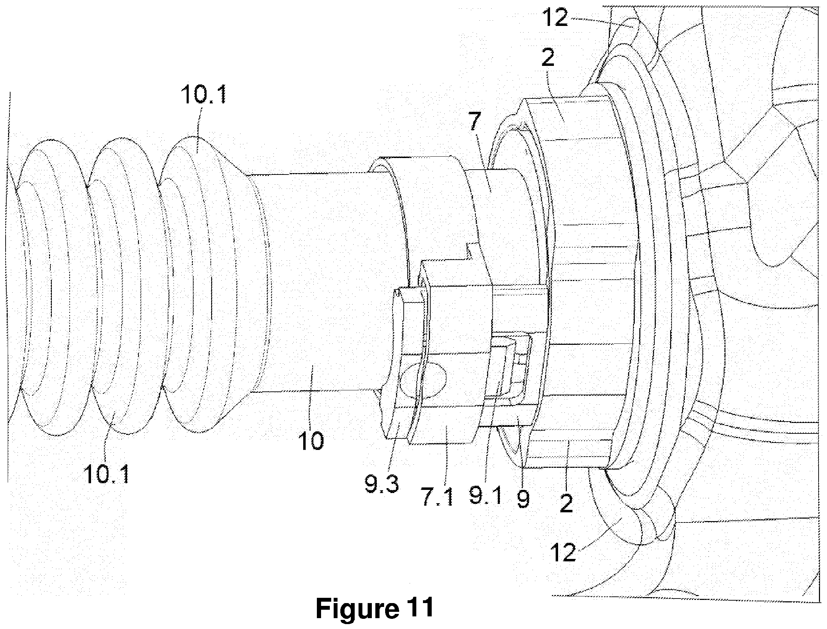

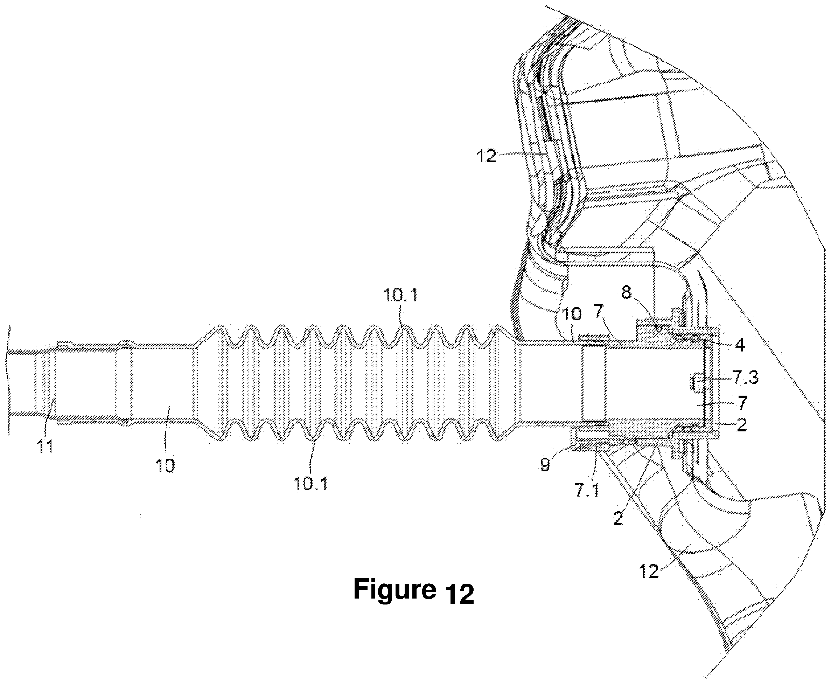

In the perspective view shown in Figure 11, a section view is provided from the area of connection of the tank connection apparatus (1) with the fuel tank (12). As can be seen in Figure 11, the end of the safety lock (9) abuts the tank connector female housing (2) when the mounting is complete. At this moment, the spring retainer slots (9.2) of the safety lock (9) limit the spring legs (8.1) of the locking spring (8) from both sides with regard to the axis of rotation, and thus prevent the locking spring (8) from rotating. Therefore, the locking spring (8) is prevented from being dislocated. Figure 12 is a side profile section view of the connection between the tank connection apparatus (1) of the invention and the fuel tank (12).

Quick and easy locking and opening of the mechanism is ensured by means of the locking spring (8) made of stainless steel found in the coupling body (7) of the tank connection apparatus (1) according to the invention. A secondary safety lock (9) is used in order to keep the locking spring (8) in its place without rotating or coming loose, and thus connection safety is improved. In the tank connection apparatus (1) according to the invention, the tank connector female housing (2) structure is simplified, turned into a weldable form, and this piece is made of carbon fibre reinforced HDPE (high density polyethylene) material via plastic injection at once.

With the multilayered corrugated pipe (10) used in the tank connection apparatus (1) according to the invention, it is possible to meet the LEV-III (low emission vehicle) standards and achieve the appropriate non-diffusion (evaporation from pores) values/parameters with low cost. By means of the extendable-retractable corrugated connection pipe (10), in case of an accident, the fuel tank (12) connection is allowed to extend in the required degree in order not to cause any damage, crack, or break. The strength against the cantilever load is improved by means of the coupling body (7) and the stainless steel locking spring (8) embodiment. With the tank connection apparatus (1) according to the invention, an audible feedback is provided to the user with the "click" sound during spring locking while mounting is completed.

## Claims

1. A tank connection apparatus (1) for providing connection of a tank filler pipe (11) with a fuel tank (12) in a fuel filling line of a vehicle, comprising:
• a tank connector female housing (2) configured to be mounted to the inlet of the fuel tank (12),
- at least one corrugated connection pipe (10),
• at least one coupling body (7) providing connection between the at least one corrugated connection pipe (10) and the tank connector female housing (2),
• the at least one corrugated connection pipe (10) being configured to be mounted in between the tank filler pipe (11) and the coupling body (7), and preventing cracking and/or breaking by extending in situations like accidents, and
• at least one locking spring (8) found on the coupling body (7) and fixing the coupling body (7) in the tank connector female housing (2) when the coupling body (7) is attached to the tank connector female housing (2);
the tank connection apparatus (1) being **characterised by**
• at least one safety lock (9) attached to a safety lock slot (7.1) found on the coupling body (7) and fixing the locking spring (8) with regard to the axis of rotation, and thus preventing it from coming loose.

2. The tank connection apparatus (1) according to Claim 1, **characterized in that**; it comprises at least one safety lock retainer (7.2) fixing the safety lock (9) at the inner part of the safety lock slot (7.1).

3. The tank connection apparatus (1) according to Claim 2, **characterized in that**; it comprises at least one safety lock snap (9.1) found on the safety lock (9) and ensuring that the safety lock (9) is fixed on the coupling body (7) by being attached to the safety lock retainer (7.2).

4. The tank connection apparatus (1) according to Claim 1, **characterized in that**; it comprises at least one handle (9.3) on a body of the safety lock (9).

5. The tank connection apparatus (1) according to Claim 1, **characterized in that**; it comprises spring legs (8.1) found at the end parts of the locking spring (8) and in order to prevent rotation of the locking spring (8), limited from both sides in the safety lock slot (7.1) with regard to the axis of rotation.

6. The tank connection apparatus (1) according to Claim 5, **characterized in that**; it comprises spring retainer slots (9.2) found at the lower part of the safety lock (9) and limiting the spring legs (8.1) of the locking spring (8) from both sides with regard to the axis of rotation.

7. The tank connection apparatus (1) according to Claim 1, **characterized in that**; the tank connector female housing (2) comprises an inclined edge (2.2), to which the coupling body (7) is attached, and in which the locking spring (8) is squeezed and fixed.

8. The tank connection apparatus (1) according to Claim 7, **characterized in that**; it comprises at least one spring locking slots (2.1) found on the inclined edge (2.2) of the tank connector female housing (2), and into which the locking spring (8) is inserted with a click sound during mounting.

9. The tank connection apparatus (1) according to Claim 8, **characterized in that**; it comprises at least one locking protrusion (8.2) found on the locking spring (8) body, fitted in the spring locking slots (2.1) with a click sound during mounting, and thus fixing the coupling body (7) in the tank connector female housing (2).

10. The tank connection apparatus (1) according to Claim 1, **characterized in that**; it comprises a tank welding protrusion (2.3) on the tank connector female housing (2), which is configured to be mounted on the fuel tank (12).

11. The tank connection apparatus (1) according to Claim 1, **characterized in that**; it comprises corrugations (10.1) found on the corrugated connection pipe (10) body and providing flexibility with its extendable-retractable structure to the corrugated connection pipe (10) when required.

## Patentansprüche

1. Tankverbindungsvorrichtung (1) zum
Bereitstellen einer Verbindung eines Tankfüllrohrs (11) mit einem Kraftstofftank (12) in einer Kraftstofffüllleitung eines Fahrzeugs, umfassend:
• ein Tankverbinder-Buchsengehäuse (2), das konfiguriert ist, um am Einlass des Kraftstofftanks (12) montiert zu werden,
- mindestens ein gewelltes Verbindungsrohr (10),
• mindestens einen Kupplungskörper (7), der eine Verbindung zwischen dem mindestens einen gewellten Verbindungsrohr (10) und dem Tankverbinder-Buchsengehäuse (2) bereitstellt;
• wobei das mindestens eine gewellte Verbindungsrohr (10) konfiguriert ist, um zwischen dem Tankfüllrohr (11) und dem Kupplungskörper (7) montiert zu werden, und Risse und/oder Brüche verhindert, indem es sich in Situationen wie Unfällen ausdehnt, und
• mindestens eine Verriegelungsfeder (8), die sich am Kupplungskörper (7) befindet und den Kupplungskörper (7) im Tankverbinder-Buchsengehäuse (2) fixiert, wenn der Kupplungskörper (7) am Tankverbinder-Buchsengehäuse (2) angebracht ist;
wobei die Tankverbindungsvorrichtung (1) **gekennzeichnet ist durch**
• mindestens einen Sicherheitsverschluss (9), der an einem sich am Kupplungskörper (7) befindenden Sicherheitsverschlussschlitz (7.1) angebracht ist und die Verriegelungsfeder (8) in Bezug auf die Drehachse fixiert und somit verhindert, dass sie sich löst.

2. Tankverbindungsvorrichtung (1) nach Anspruch 1,
**dadurch gekennzeichnet, dass** sie
mindestens einen Sicherheitsverschlusshalter (7.2) umfasst, der den Sicherheitsverschluss (9) am inneren Teil des Sicherheitsverschlussschlitzes (7.1) fixiert.

3. Tankverbindungsvorrichtung (1) nach Anspruch 2,
**dadurch gekennzeichnet, dass** sie
mindestens einen Sicherheitsverschlusseinraster (9.1) umfasst, der sich am Sicherheitsverschluss (9) befindet und sicherstellt, dass der Sicherheitsverschluss (9) am Kupplungskörper (7) fixiert ist, indem er am Sicherheitsverschlusshalter (7.2) angebracht ist.

4. Tankverbindungsvorrichtung (1) nach Anspruch 1, **dadurch gekennzeichnet, dass** sie mindestens einen Griff (9.3) an einem Körper des Sicherheitsverschlusses (9) umfasst.

5. Tankverbindungsvorrichtung (1) nach Anspruch 1, **dadurch gekennzeichnet dass** sie Federschenkel (8.1) umfasst, die sich an den Endteilen der Verriegelungsfeder (8) befinden und, um eine Drehung der Verriegelungsfeder (8) zu verhindern, von beiden Seiten im Sicherheitsverschlussschlitz (7.1) in Bezug auf die Drehachse begrenzt sind.

6. Tankverbindungsvorrichtung (1) nach Anspruch 5, **dadurch gekennzeichnet, dass** sie
Federhalteschlitze (9.2) umfasst, die sich am unteren Teil des Sicherheitsverschlusses (9) befinden und die Federschenkel (8.1) der Verriegelungsfeder (8) von beiden Seiten in Bezug auf die Drehachse begrenzen.

7. Tankverbindungsvorrichtung (1) nach Anspruch 1, **dadurch gekennzeichnet, dass** das Tankverbinder-Buchsengehäuse (2) eine geneigte Kante (2.2) umfasst, an der der Kupplungskörper (7) angebracht ist und in der die Verriegelungsfeder (8) zusammengedrückt und fixiert ist.

8. Tankverbindungsvorrichtung (1) nach Anspruch 7,
**dadurch gekennzeichnet, dass** sie
mindestens einen Federverriegelungsschlitze (2.1) umfasst, der sich an der geneigten Kante (2.2) des Tankverbinder-Buchsengehäuses (2) befindet und in den die Verriegelungsfeder (8) während der Montage mit einem Klickgeräusch eingesetzt wird.

9. Tankverbindungsvorrichtung (1) nach Anspruch 8,
**dadurch gekennzeichnet, dass** sie
mindestens einen sich am Körper der Verriegelungsfeder (8) befindlichen Verriegelungsvorsprung (8.2) umfasst, der in die Federverriegelungsschlitze (2.1) mit einem Klickgeräusch während der Montage eingepasst wird und somit den Kupplungskörper (7) im Tankverbinder-Buchsengehäuse (2) fixiert.

10. Tankverbindungsvorrichtung (1) nach Anspruch 1, **dadurch gekennzeichnet, dass** sie einen Tankschweißvorsprung (2.3) an dem Tankverbinder-Buchsengehäuse (2) umfasst, der konfiguriert ist, um am Kraftstofftank (12) montiert zu werden.

11. Tankverbindungsvorrichtung (1) nach Anspruch 1, **dadurch gekennzeichnet, dass** sie Wellen (10.1) umfasst, die sich am Körper des gewellten Verbindungsrohrs (10) befinden und bei Bedarf Flexibilität mit ihrer ausziehbaren-einziehbaren Struktur für das gewellte Verbindungsrohr (10) bereitstellen.

## Revendications

1. Appareil de raccordement de réservoir (1) pour assurer le raccordement d'un tuyau de remplissage de réservoir (11) avec un réservoir de carburant (12) dans une ligne de remplissage de carburant d'un véhicule, comprenant :
• un boîtier femelle de raccord de réservoir (2) configuré pour être assemblé avec l'entrée du réservoir de carburant (12),
- au moins un tuyau de raccordement ondulé (10),
• au moins un corps de couplage (7) assurant le raccordement entre l'au moins un tuyau de raccordement ondulé (10) et le boîtier femelle de raccord de réservoir (2),
• l'au moins un tuyau de raccordement ondulé (10) étant configuré pour être assemblé entre le tuyau de remplissage de réservoir (11) et le corps de couplage (7), et empêchant la fissuration et / ou la rupture en se déployant dans des situations telles que des accidents, et
• au moins un ressort de verrouillage (8) se trouvant sur le corps d'accouplement (7) et fixant le corps d'accouplement (7) dans le boîtier femelle de raccord de réservoir (2) lorsque le corps d'accouplement (7) est attaché au boîtier femelle de raccord de réservoir (2) ;
l'appareil de raccordement de réservoir (1) étant **caractérisé par** :
• au moins un verrou de sécurité (9) attaché à une fente de verrou de sécurité (7.1) se trouvant sur le corps d'accouplement (7) et fixant le ressort de verrouillage (8) par rapport à l'axe de rotation, et empêchant ainsi son desserrage.

2. Appareil de raccordement de réservoir (1) selon la revendication 1,
**caractérisé en ce qu'**il comprend au moins un dispositif de retenue de verrou de sécurité (7.2) fixant le verrou de sécurité (9) à la partie intérieure de la fente de verrou de sécurité (7.1).

3. Appareil de raccordement de réservoir (1) selon la revendication 2,
**caractérisé en ce qu'**il comprend au moins un mousqueton de verrouillage de sécurité (9.1) se trouvant sur le verrou de sécurité (9) et garantissant que le verrou de sécurité (9) est fixé sur le corps de couplage (7) en étant attaché à l'élément de retenue de verrou de sécurité (7.2).

4. Appareil de raccordement de réservoir (1) selon la revendication 1, **caractérisé en ce qu'**il comprend au moins une poignée (9.3) sur un corps du verrou de sécurité (9).

5. Appareil de raccordement de réservoir (1) selon la revendication 1, **caractérisé en ce qu'**il comprend des jambes de ressort (8.1) se trouvant au niveau des parties d'extrémité du ressort de verrouillage (8) et afin d'empêcher la rotation du ressort de verrouillage (8), sont limitées des deux côtés dans la fente de verrouillage de sécurité (7.1) par rapport à l'axe de rotation.

6. Appareil de raccordement de réservoir (1) selon la revendication 5, **caractérisé en ce qu'**il comprend des fentes de retenue de ressort (9.2) situées au niveau de la partie inférieure du verrou de sécurité (9) et limitant les jambes de ressort (8.1) du ressort de verrouillage (8) des deux côtés par rapport à l'axe de rotation.

7. Appareil de raccordement de réservoir (1) selon la revendication 1, **caractérisé en ce que** le boîtier femelle de raccord de réservoir (2) comprend un bord incliné (2.2), auquel le corps d'accouplement (7) est fixé, et dans lequel le ressort de verrouillage (8) est serré et fixé.

8. Appareil de raccordement de réservoir (1) selon la revendication 7,
**caractérisé en ce qu'**il comprend au moins une fente de verrouillage à ressort (2.1) située sur le bord incliné (2.2) du boîtier femelle de raccord de réservoir (2), et dans laquelle le ressort de verrouillage (8) est inséré avec un clic sonore lors du montage.

9. Appareil de raccordement de réservoir (1) selon la revendication 8,
**caractérisé en ce qu'**il comprend au moins une saillie de verrouillage (8.2) se trouvant sur le corps du ressort de verrouillage (8), ajustée dans les fentes de verrouillage du ressort (2.1) avec un clic sonore lors du montage, et fixant ainsi le corps de couplage (7) dans le boîtier femelle du raccord de réservoir (2).

10. Appareil de raccordement de réservoir (1) selon la revendication 1, **caractérisé en ce qu'**il comprend une saillie de soudage de réservoir (2.3) sur le boîtier femelle de raccord de réservoir (2), qui est configurée pour être montée sur le réservoir de carburant (12).

11. Appareil de raccordement de réservoir (1) selon la revendication 1, **caractérisé en ce qu'**il comprend des ondulations (10.1) se trouvant sur le corps du tuyau de raccordement ondulé (10) et apportant de la flexibilité avec sa structure extensible-rétractable au tuyau de raccordement ondulé (10) si nécessaire.
